(19)

Europäisches
Patentamt
European
Patent Office
Office européen
des brevets

(11) **EP 4 242 683 A1**

(12) **EUROPEAN PATENT APPLICATION**

(43) Date of publication:
**13.09.2023 Bulletin 2023/37**

(21) Application number: **22181560.8**

(22) Date of filing: **28.06.2022**

(51) International Patent Classification (IPC):
***G01S 5/02*** *(2010.01)*

(52) Cooperative Patent Classification (CPC):
**G01S 5/02521; G01S 5/0294**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.03.2022 CN 202210225764**

(71) Applicant: **HAN Networks Co., Ltd.
Beijing City 100000 (CN)**

(72) Inventors:
• **JIANG, Liang
  Beijing City, 100000 (CN)**
• **FAN, Xiaowei
  Beijing City, 100000 (CN)**
• **LIU, Tu
  Beijing City, 100000 (CN)**
• **CHANG, Zhimin
  Beijing City, 100000 (CN)**
• **WANG, Hui
  Beijing City, 100000 (CN)**

(74) Representative: **Plasseraud IP
66, rue de la Chaussée d'Antin
75440 Paris Cedex 09 (FR)**

(54) **INDOOR POSITIONING METHOD BASED ON RSSI FINGERPRINTS**

(57)     The invention relates to the field of wireless positioning technology, and more particularly, to an indoor positioning method based on RSSI fingerprints. The method comprises: Step S1, upon detection of generating of a positioning signal by a device to be located, obtaining a received signal strength of each positioning gateway; Step S2, generating, according to the received signal strength and a prior probability, a global posterior probability of each fingerprint point; Step S3, outputting, according to the global posterior probability and location coordinates of the fingerprint point, a positioning result, and generating, according to the positioning result and the global posterior probability, a new prior probability corresponding to each fingerprint point, then returning to Step S1. The present invention has the following advantageous effects: positioning results are introduced during a continuous positioning process, as a result, the next prior probability for the same device to be located is generated. In doing so, fusion of historical data is achieved during the continuous positioning process, so that a previous positioning can be associated with the current positioning. The coordinate jump phenomenon occurred during an independent positioning process in the prior art is reduced, and the continuity of a positioning trajectory and the positioning stability are improved.

Step S1, when each of the plurality of positioning gateways detects that a device to be located generates a positioning signal, obtaining a received signal strength of the positioning signal corresponding to each of the plurality of positioning gateways, respectively;

Step S2, generating, according to the received signal strength and a pre-generated prior probability, a global posterior probability of each of the plurality of fingerprint points;

Step S3, generating and outputting, according to the global posterior probability and location coordinates of the fingerprint points, a positioning result, and generating, according to the positioning result and the global posterior probability, a new prior probability corresponding to each of the plurality of fingerprint points.

Figure 2

EP 4 242 683 A1

**Description**

**BACKGROUND OF THE INVENTION**

**1. Field of the Invention**

The invention relates to the field of wireless positioning technology, and more particularly, to an indoor positioning method based on RSSI fingerprints.

**2. Description of the Related Art**

A wireless positioning system is a system that works to provide terminal position information and services in the following procedure. Specifically, in a wireless mobile communication network, performing measurement of characteristic parameters of a received radio wave, then making an estimation of the geographic location of a mobile terminal by using a specific algorithm, with the support of the measured wireless signal data. Common wireless positioning technologies based on field strength measurement include a signal propagation model method, a fingerprint matching method and so on. The fingerprint matching method is a method of pre-setting fingerprint points in a specific positioning scene, collecting a field strength vector at each fingerprint point and adopting it as a basis for positioning, and matching the device to be located in the actual positioning through a comparison algorithm, so as to implement the technology for achieving the positioning effects.

A wireless positioning technology based on the comparison algorithm, such as a bayesian algorithm, is known in the prior art. In this type of technology, the positioning of the device to be located is usually considered as an event, and fingerprint points collected before the positioning process are processed as a prior probability. As a result, a posterior probability corresponding to the current received signal strength is obtained, and then the device to be located can be effectively determined.

However, in the actual implementation process, the inventor found that the wireless positioning technology based on the bayesian algorithm often relies on a constant fingerprint database for positioning. That is to say, in a continuous positioning process for the same device to be located, two adjacent positioning behaviors are substantially isolated events. When the wireless environment is complex and the received signal strength fluctuates, results output from the two positioning may have a large coordinate jump, which leads to an unstable positioning process and a poor accuracy.

**SUMMARY OF THE INVENTION**

Given that the foregoing problems exist in the prior art, the present invention provides an indoor positioning method based on RSSI fingerprints.

Specific technical solution is as follows:

an indoor positioning method based on RSSI fingerprints, wherein a plurality of positioning gateways are pre-configured in a positioning area, and a plurality of fingerprint points are provided in the positioning area;
wherein the positioning method comprises:

Step S1, when each of the plurality of positioning gateways detects that a device to be located generates a positioning signal, obtaining a received signal strength of the positioning signal corresponding to each of the plurality of positioning gateways, respectively;
Step S2, generating, according to the received signal strength and a pre-generated prior probability, a global posterior probability of each of the plurality of fingerprint points; and
Step S3, generating and outputting, according to the global posterior probability and location coordinates of the fingerprint points, a positioning result, and generating, according to the positioning result and the global posterior probability, a new prior probability corresponding to each of the plurality of fingerprint points, respectively, then returning to Step S1.

Preferably, a prior probability generation process is also included prior to the positioning method, wherein the prior probability generation process is used to generate the pre-generated prior probability;

the prior probability comprises a single point prior probability and an overall prior probability;
the prior probability generation process comprises:

Step S01, generating the positioning signal on each of the plurality of fingerprint points, and obtaining the received signal strength corresponding to each of the plurality of fingerprint points on each of the plurality of positioning gateways, respectively; and

Step S02, generating, according to a plurality of received signal strengths, the single point prior probability and the overall prior probability, respectively.

Preferably, in Step S02, a method for generating the single point prior probability is expressed as:

$$P_i(RSSI = a|F_m) = \frac{SUM(RSSI = a|F_m)}{SUM(RSSI = any|F_m)},$$

wherein $P_i(RSSI = a|F_m)$ is the single point prior probability, $SUM(RSSI = a|F_m)$ is a total number of times that the $i^{th}$ positioning gateway generates the received signal strength being $a$ when the positioning signal is generated on the $m^{th}$ fingerprint point, and $SUM(RSSI = any|F_m)$ is the number of the received signal strength generated by the $i^{th}$ positioning gateway when the positioning signal is generated on the $m^{th}$ fingerprint point.

Preferably, in Step S02, a method for generating the overall prior probability is expressed as:

$$P_i(RSSI = a) = \frac{SUM(RSSI = a)}{SUM(RSSI = any)},$$

wherein $P_i(RSSI = a)$ is the overall prior probability, $SUM(RSSI = a)$ is a total number of times that the $i^{th}$ positioning gateway generates the received signal strength being $a$, and $SUM(RSSI = any)$ is the number of the received signal strength generated by the $i^{th}$ positioning gateway.

Preferably, Step S2 comprises:

Step S21, generating a gateway posterior probability of each of the plurality of fingerprint points in each of the plurality of positioning gateways, respectively, according to the received signal strength and the prior probability corresponding to each of the plurality of fingerprint points; and

Step S22, generating the global posterior probability corresponding to each of the plurality of fingerprint points, respectively, according to the plurality of gateway posterior probabilities.

Preferably, the prior probability further comprises a positioning prior probability;

in Step S21, a method of generating the gateway posterior probability comprises:

$$P_i(F_m|RSSI = a) = \frac{P_i(RSSI = a|F_m) \times P^t(F_m)}{P_i(RSSI = a)}$$

, wherein $P_i(F_m|RSSI = a)$ is the gateway posterior probability corresponding to the $m^{th}$ fingerprint point in the $i^{th}$ positioning gateway, $P_i(RSSI = a|F_m)$ is the single point prior probability, $P^t(F_m)$ is the positioning prior probability, $P_i(RSSI = a)$ is the overall prior probability;

when each of the plurality of positioning gateways receives the positioning signal generated by the device to be

$$\frac{1}{n}$$

located for the first time, the positioning prior probability is $\frac{1}{n}$ , wherein n is the total number of the fingerprint points.

Preferably, in Step S22, a method for generating the global posterior probability comprises:

obtaining the received signal strengths of the plurality of positioning gateways, sorting the plurality of positioning gateways from high to low according to the received signal strengths, so as to successively select z positioning gateways with the highest received signal strengths as a group of positioning gateways;

$$P(F_m) = \frac{\sum P_l(F_m|RSSI = a)}{z}$$

for the global posterior probability corresponding to the fingerprint point

, wherein $P(F_m)$ is the global posterior probability corresponding to $m^{th}$ fingerprint point, $P_l(RSSI = a|F_m)$ is the global posterior probability corresponding to the $m^{th}$ fingerprint point in the $l^{th}$ positioning gateway in the group of positioning gateways, $l \in (1,2, ..., z)$ , z is a total number of the positioning gateways in the group of the positioning gateways.

Preferably, Step S3 comprises:

Step S31, obtaining the global posterior probability of each of the plurality of fingerprint points, and sorting the plurality of fingerprint points from high to low according to the global posterior probability, so as to obtain a plurality of fingerprint points having the highest global posterior probabilities as a group of positioning fingerprint points;
Step S32, in the group of positioning fingerprint points, generating, according to the global posterior probability and a location coordinate of each of the plurality of fingerprint points, the positioning result and outputting the same; and
Step S33, generating, according to the positioning result and the global posterior probability, a new prior probability corresponding to each fingerprint point, respectively, then returning to Step S1.

Preferably, in Step S32, a method for generating the positioning result $(\hat{x}, \hat{y})$ comprises:

$$\hat{x} = \frac{\sum P(F_n) \times x_n}{q}$$

, wherein $\hat{x}$ is an abscissa of the positioning result, q is the number of the fingerprint points in the group of positioning fingerprint points, $x_n$ is an abscissa of the location coordinate of the $n^{th}$ fingerprint point in the group of positioning fingerprint points, $P(F_n)$ is the global posterior probability of the $n^{th}$ fingerprint point in the group of positioning fingerprint points, $n \in (1,2, ..., q)$ ;

$$\hat{y} = \frac{\sum P(F_n) \times y_n}{q}$$

, wherein $\hat{y}$ is an abscissa of the positioning result, q is the number of the fingerprint points in the group of positioning fingerprint points, $y_n$ is an ordinate of the location coordinate of the $n^{th}$ fingerprint point in the group of positioning fingerprint points, $P(F_n)$ is the global posterior probability of the $n^{th}$ fingerprint point in the group of positioning fingerprint points, $n \in (1,2, ..., q)$ .

Preferably, in Step S33, a method for generating the new prior probability comprises:

$$P^t(F_m) = \sum \frac{P(F_g) \times 75\%}{e} + \sum \frac{P(F_h) \times 25\%}{f}$$

, wherein $P^t(F_m)$ is the prior probability corresponding to the $m^{th}$ fingerprint point, $P(F_g)$ is the prior probability of the $g^{th}$ fingerprint point whose distance from the positioning result is within a first distance interval, $g \in (1,2, ..., e)$ , e is a total number of the fingerprint points whose distance from the positioning result is within the first distance interval, $P(F_h)$ is the prior probability of the $h^{th}$ fingerprint point whose distance from the positioning result is within a second distance interval, $h \in (1,2, ..., f)$ , f is a total number of the fingerprint points whose distance from the positioning result is within the second distance interval.

By adopting the above-mentioned technical solutions, the present invention has the following advantages or beneficial effects: positioning results are introduced during a continuous positioning process, as a result, the next prior probability for the same device to be located is generated. In doing so, fusion of historical data is achieved during the continuous positioning process, so that a previous positioning can be associated with the current positioning. The coordinate jump phenomenon occurred during an independent positioning process in the prior art is reduced, and the continuity of a positioning trajectory and the positioning stability are improved.

**BRIEF DESCRIPTION OF THE DRAWINGS**

The accompanying drawings, together with the specification, illustrate exemplary embodiments of the present disclosure, and, together with the description, serve to explain the principles of the present invention.

Figure 1 is a schematic diagram of a positioning area according to an embodiment of the present invention;
Figure 2 is a schematic diagram of a positioning method in an embodiment of the present invention;
Figure 3 is a schematic diagram of a prior probability generation process in an embodiment of the present invention;
Figure 4 is a schematic diagram of sub-steps of Step S2 in an embodiment of the present invention;
Figure 5 is a schematic diagram of sub-steps of Step S3 in an embodiment of the present invention.

**DETAILED DESCRIPTION**

The technical solution set forth in the embodiments of the present invention will now be described clearly and fully hereinafter with reference to the accompanying drawings of the embodiments of the present invention. Obviously, such embodiments provided in the present invention are only part of the embodiments instead of all embodiments. It should be understood that all the other embodiments obtained from the embodiments set forth in the present invention by one skilled in the art without any creative work fall within the scope of the present invention.

Notably, the embodiments set forth in the present invention and features of the embodiments may be combined in any suitable manner.

The present invention will be described hereinafter with reference to the accompanying drawings and particular embodiments, but the invention is not limited thereto.

The invention comprises:

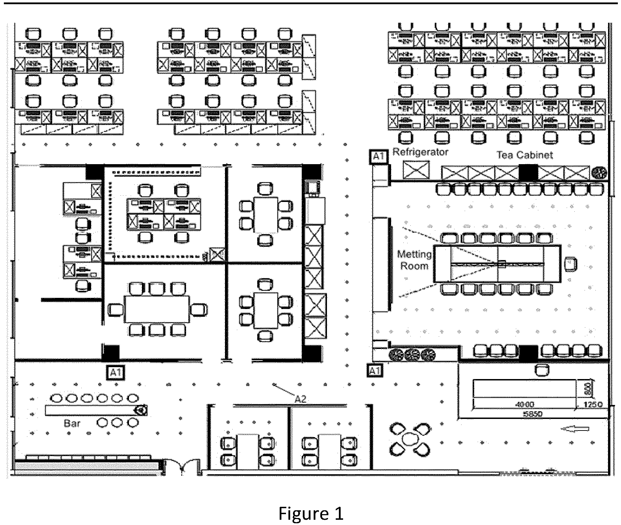

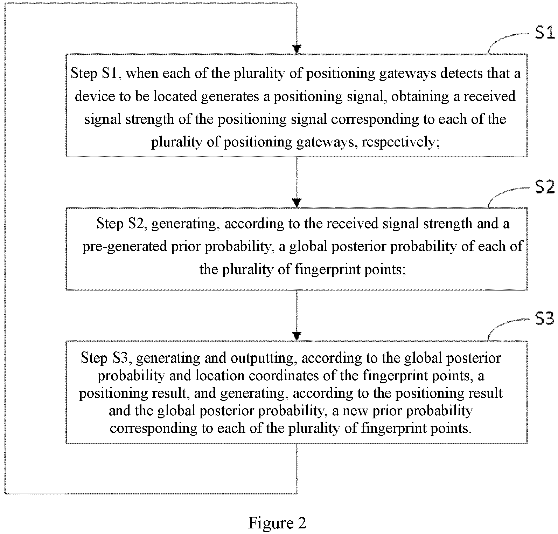

an indoor positioning method based on RSSI fingerprints, as shown in Figure 1, a plurality of positioning gateways A1 are pre-configured in a positioning area, and a plurality of fingerprint points A2 are provided in the positioning area; as shown in Figure 2, the positioning method comprises:

Step S1, when each of the plurality of positioning gateways A1 detects that a device to be located generates a positioning signal, obtaining a received signal strength of the positioning signal corresponding to each of the plurality of positioning gateways A1, respectively;
Step S2, generating, according to the received signal strength and a pre-generated prior probability, a global posterior probability of each of the plurality of fingerprint points A2; and
Step S3, generating and outputting, according to the global posterior probability and location coordinates of the fingerprint points A2, a positioning result, and generating, according to the positioning result and the global posterior probability, a new prior probability corresponding to each of the plurality of fingerprint points, respectively, then returning to Step S1.

In particular, considering that multiple positioning based on fingerprint points are mutually independent in the prior art, measures are taken in this embodiment to solve the above-mentioned problem. In this embodiment, after a positioning result is generated, the positioning result is introduced into the next positioning for the same device to be located, and it serves as a parameter in the prior probability of the next positioning. In this way, problems of positioning coordinate jump and poor trajectory continuity resulting from the wireless signal fluctuation can be solved.

In the implementation process, the positioning gateway A1 is a receiving device based on the field strength positioning technology. It receives and recognizes a positioning signal sent from the device to be located, and then locate the device to be located according to the received signal strength indication (RSSI) of the plurality of positioning gateways A1 and pre-collected fingerprint points. The device to be located is a device with a wireless communication function, such as a positioning tag (Tag), a mobile phone, a tablet, etc. Such a device can generate a positioning signal corresponding to each of the plurality of positioning gateways A1. The positioning signal can be a wireless signal realized with the prior art, such as a Bluetooth signal, a WLAN signal, a ZigBee signal, etc. The plurality of fingerprint points A2 mean fingerprint points in a positioning area for positioning. Before the positioning process, each fingerprint point A2 uses the same calibration device as the device to be located to generate a calibration signal identical to the positioning signal, so that each positioning gateway A1 generates a received signal strength corresponding to the calibration signal. By recording the received signal strength of the calibration signal generated on each fingerprint point A2 on each of the plurality of positioning gateways A1, a signal receiving set ($RSSI_j = [RSSI_1, RSSI_2, ...RSSI_n]$) corresponding to each fingerprint point is generated (wherein $RSSI_j$ is the signal receiving set corresponding to the $j^{th}$ fingerprint points, $RSSI_n$ is the received signal strength obtained by $n^{th}$ positioning gateway) to form a fingerprint database for matching the received signal strength generated by the positioning signal to implement the positioning process.

As an optional embodiment, as shown in Figure 1, a positioning route is set in the positioning area, and the positioning route is a route trajectory formed by connecting a plurality of positions that the device to be located may reach during actual use. The fingerprint points A2 are evenly distributed on the positioning route.

As an optional embodiment, in the process of generating the fingerprint database, the calibration device continuously generates the calibration signals, and travels from a first end of a certain section of the positioning route through each fingerprint point A2 to a second end of the section of the positioning route at a specific speed of *v*. Then, the collection time of each fingerprint point A2 can be obtained according to the time $T_1$ when the calibration device passes the first end, the time $T_2$ when the calibration device passes the second end, and a length *s* of the positioning route, which specifically comprises:

$$\hat{T} = \frac{T_2 - T_1}{s}$$

first of all, obtaining a length of time for collection of each fingerprint point A2, , wherein $\hat{T}$ is the length of time for collection of each fingerprint point A2, $T_1$ is the time when the calibration device passes the first end, $T_2$ is the time when the calibration device passes the second end, s is the length of the section of the positioning route;

In this section of the positioning route, a length of time for collection of the $j^{th}$ fingerprint point is $\hat{T}_j = [T_1 + (j - 1) * \hat{T}, T_1 + j * \hat{T}]$, wherein $\hat{T}_j$ is the length of time for collection of the $j^{th}$ fingerprint point, $T_1$ is the time when the calibration device passes the first end, $T_2$ is the time when the calibration device passes the second end, $\hat{T}$ is the length of time for collection of each fingerprint point A2, *j* is a serial number of this fingerprint point in the section of the positioning route. Since the fingerprint points A2 are evenly distributed in the positioning route, specific collection time for each fingerprint point A2 can be located during the continuous collection process according to the above-mentioned method. Then reading collection logs of the positioning gateways A1 by referring to the collection time, so as to quickly obtain the received signal strength generated by each fingerprint point A2, shortening time required for the generation of the fingerprint database.

In a preferred embodiment, a prior probability generation process is also included prior to the positioning method, wherein the prior probability generation process is used to generate the pre-generated prior probability;

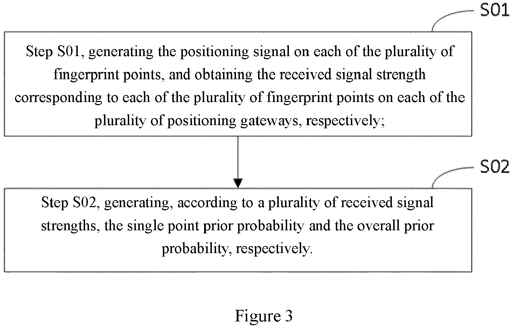

the prior probability comprises a single point prior probability and an overall prior probability;
as shown in Figure 3, the prior probability generation process comprises:

Step S01, generating the positioning signal on each of the plurality of fingerprint points A2, and obtaining the received signal strength corresponding to each of the plurality of fingerprint points A2 on each of the plurality of positioning gateways A1, respectively; and
Step S02, generating, according to a plurality of received signal strengths, the single point prior probability and the overall prior probability, respectively.

In particular, in order to achieve a better positioning effect, in this embodiment, the single point prior probability that each positioning gateway A1 obtains a specific received signal strength at each fingerprint point A2 is generated respectively, according to the received signal strength, and each positioning gateway obtains the overall prior probability of a specific received signal strength in the entire positioning area. All of those effects contribute to a better positioning effect.

In a preferred embodiment, in Step S02, a method for generating the single point prior probability is expressed as:

$$P_i(RSSI = a|F_m) = \frac{SUM(RSSI = a|F_m)}{SUM(RSSI = any|F_m)},$$

wherein $P_i(RSSI = a|F_m)$ is the single point prior probability, $SUM(RSSI = a|F_m)$ is a total number of times that the $i^{th}$ positioning gateway generates the received signal strength being *a* when the positioning signal is generated on the $m^{th}$ fingerprint point, and $SUM(RSSI = any|F_m)$ is the number of the received signal strength generated by the $i^{th}$ positioning gateway when the positioning signal is generated on the $m^{th}$ fingerprint point.

In a preferred embodiment, in Step S02, a method for generating the overall prior probability is expressed as:

$$P_i(RSSI = a) = \frac{SUM(RSSI = a)}{SUM(RSSI = any)},$$

wherein $P_i(RSSI = a)$ is the overall prior probability, $SUM(RSSI = a)$ is a total number of times that the $i^{th}$ positioning gateway generates the received signal strength being $a$, and $SUM(RSSI = any)$ is the number of the received signal strength generated by the $i^{th}$ positioning gateway.

In the implementation process, a signal strength set of all the fingerprint points and the positioning gateways

$$RSSI = \begin{bmatrix} RSSI_1^1 & \cdots & RSSI_1^i \\ \vdots & \ddots & \vdots \\ RSSI_j^1 & \cdots & RSSI_j^i \end{bmatrix}$$

is stored in the fingerprint database: , wherein $RSSI$ is the signal strength set, $RSSI_j^i$ is the received signal strength of the $j^{th}$ fingerprint point received by the $i^{th}$ positioning gateway, then the single point prior probability and the overall prior probability can be generated respectively, according to the signal strength set.

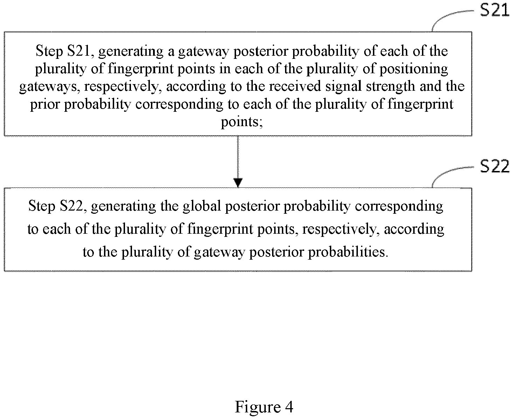

In a preferred embodiment, as shown in Figure 4, Step S2 comprises:

Step S21, generating a gateway posterior probability of each of the plurality of fingerprint points in each of the plurality of positioning gateways, respectively, according to the received signal strength and the prior probability corresponding to each of the plurality of fingerprint points; and
Step S22, generating the global posterior probability corresponding to each of the plurality of fingerprint points, respectively, according to the plurality of gateway posterior probabilities.

In particular, in order to achieve a better positioning effect, in this embodiment, generating the gateway posterior probability of each fingerprint point generated, according to the received signal strength, and then obtaining the global posterior probability of each fingerprint point in a comprehensive way, which makes it possible to screen out the fingerprint points with higher probability, so as to obtain more accurate positioning results.

In a preferred embodiment, the prior probability further comprises a positioning prior probability;

in Step S21, a method of generating the gateway posterior probability comprises:

$$P_i(F_m|RSSI = a) = \frac{P_i(RSSI = a|F_m) \times P^t(F_m)}{P_i(RSSI = a)},$$

wherein $P_i(F_m|RSSI = a)$ is the gateway posterior probability corresponding to the $m^{th}$ fingerprint point in the $i^{th}$ positioning gateway, $P_i(RSSI = a|F_m)$ is the single point prior probability, $P^t(F_m)$ is the positioning prior probability, $P_i(RSSI = a)$ is the overall prior probability;

when each of the plurality of positioning gateways A1 receives the positioning signal generated by the device to be located for the first time, the positioning prior probability is $\frac{1}{n}$, wherein n is the total number of the fingerprint points.

In particular, considering that the current positioning behavior cannot be adjusted according to the historical positioning results in the prior art, in this embodiment, the parameter of the positioning prior probability is introduced in the process of generating the gateway posterior probability, so as to realize the adjustment of the posterior probability in each positioning process, and then better positioning continuity in the continuous positioning process for the same device to be located can be achieved.

In a preferred embodiment, in Step S22, a method for generating the global posterior probability comprises:

obtaining the received signal strengths of the plurality of positioning gateways, sorting the plurality of positioning gateways from high to low according to the received signal strengths, so as to successively select z positioning gateways with the highest received signal strengths as a group of positioning gateways;

for the global posterior probability corresponding to the fingerprint point

$$P(F_m) = \frac{\sum P_l(F_m | RSSI = a)}{z}$$

, wherein $P(F_m)$ is the global posterior probability corresponding to $m^{th}$ fingerprint point, $P_l(F_m | RSSI = a)$ is the global posterior probability corresponding to the $m^{th}$ fingerprint point in the $l^{th}$ positioning gateway in the group of positioning gateways, $l \in (1, 2, ..., z)$, z is a total number of the positioning gateways in the group of the positioning gateways.

In particular, in this embodiment, the positioning gateways are grouped according to the received signal strength, thereby filtering out some positioning gateways that are too far away from the device to be located, and whose received signal strengths are low. Furthermore, the processing time for the global posterior probability of each fingerprint point is shortened, and the positioning efficiency is improved.

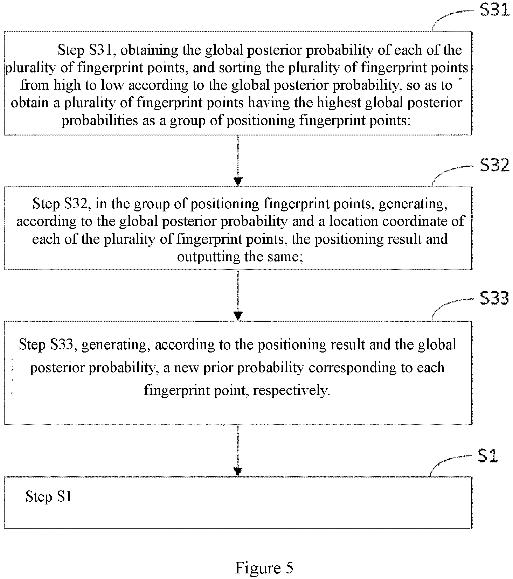

In a preferred embodiment, as shown in Figure 5, Step S3 comprises:

Step S31, obtaining the global posterior probability of each of the plurality of fingerprint points, and sorting the plurality of fingerprint points from high to low according to the global posterior probability, so as to obtain a plurality of fingerprint points having the highest global posterior probabilities as a group of positioning fingerprint points;

Step S32, in the group of positioning fingerprint points, generating, according to the global posterior probability and a location coordinate of each of the plurality of fingerprint points, the positioning result and outputting the same; and

Step S33, generating, according to the positioning result and the global posterior probability, a new prior probability corresponding to each fingerprint point, respectively, then returning to Step S1.

In particular, in order to solve the problem that the multiple positioning behaviors are independent of each other, and the next positioning cannot be adjusted in the continuous positioning process according to the historical positioning results in the prior art, in this embodiment, the positioning results are introduced to generate the prior probability adopted for the next positioning. In this way, better continuity for a single device to be located in the continuous positioning process is achieved.

In the implementation process, the adjustment of the prior probability depends on the positioning prior probability. For this purpose, obtaining the positioning result and predicting the fingerprint points around the positioning result, that is, the device to be located should only be able to move to a fingerprint point within a certain range near the positioning result, so as to adjust the positioning prior probability of this part of the fingerprint point, and to improve the continuity of the positioning trajectory in the next positioning process.

In a preferred embodiment, in Step S32, a method for generating the positioning result $(\hat{x}, \hat{y})$ comprises:

$$\hat{x} = \frac{\sum P(F_n) \times x_n}{q}$$

, wherein $\hat{x}$ is an abscissa of the positioning result, q is the number of the fingerprint points in the group of positioning fingerprint points, $x_n$ is an abscissa of the location coordinate of the $n^{th}$ fingerprint point in the group of positioning fingerprint points, $P(F_n)$ is the global posterior probability of the $n^{th}$ fingerprint point in the group of positioning fingerprint points, $n \in (1, 2, ..., q)$;

$$\hat{y} = \frac{\sum P(F_n) \times y_n}{q}$$

, wherein $\hat{y}$ is an abscissa of the positioning result, q is the number of the fingerprint points in the group of positioning fingerprint points, $y_n$ is an ordinate of the location coordinate of the $n^{th}$ fingerprint point in the group of positioning fingerprint points, $P(F_n)$ is the global posterior probability of the $n^{th}$ fingerprint point in the group of positioning fingerprint points, $n \in (1, 2, ..., q)$.

In particular, in order to achieve a better positioning effect, in this embodiment, the global posterior probability is regarded as a weight of a selected fingerprint point, and then actual positioning coordinates are obtained through a weighted operation, so that a better judgment of an actual location of the device to be located is achieved, and positioning accuracy is improved.

In a preferred embodiment, in Step S33, a method for generating the new prior probability comprises:

$$P^t(F_m) = \sum \frac{P(F_g) \times 75\%}{e} + \sum \frac{P(F_h) \times 25\%}{f}$$,

wherein $P^t(F_m)$ is the prior probability corresponding to the $m^{th}$ fingerprint point, $P(F_g)$ is the prior probability of the $g^{th}$ fingerprint point whose distance from the positioning result is within a first distance interval, $g \in (1,2, ..., e)$, e is a total number of the fingerprint points whose distance from the positioning result is within the first distance interval, $P(F_h)$ is the prior probability of the $h^{th}$ fingerprint point whose distance from the positioning result is within a second distance interval, $h \in (1,2, ..., f)$, f is a total number of the fingerprint points whose distance from the positioning result is within the second distance interval.

In particular, in the prior art, two positioning behaviors are independent of each other, so positioning continuity is poor, which could easily lead to the problem of coordinate jump. In order to solve the above-mentioned problem, in this embodiment, the movement trajectory of the device to be located in a positioning area is estimated, so that movement of the device to be located in the positioning area can be considered as a condition for affecting the next positioning result. In this way, prior probabilities of fingerprint points around the positioning result are adjusted, and the previous positioning result can be introduced into the next positioning process, thereby improving the continuity of positioning trajectories.

During the implementation process, an average moving speed $V_1$ and a maximum moving speed $V_2$ of the device to be located in the positioning area are pre-collected through experiments during the positioning process. Then a range reachable to the device to be located in the two positioning processes can be obtained according to a positioning cycle. The range comprises a range $d_1$ that the device to be located reaches according to the average moving speed $V_1$, and a range $d_2$ that the device to be located reaches according to the maximum moving speed $V_2$. Then the first distance interval is in a range of $[0, d_1]$, and the second distance interval is in a range of $[d_1, d_2]$. Based on the first distance interval and the second distance interval, and a probability that the device to be located may be located in the first distance interval or the second distance interval during the next positioning process, a new positioning prior probability can be generated, so that adjustment of the next positioning can be achieved based on the current positioning result.

By adopting the above-mentioned technical solutions, the present invention has the following beneficial effects: positioning results are introduced during a continuous positioning process, as a result, the next prior probability for the same device to be located is generated. In doing so, fusion of historical data is achieved during the continuous positioning process, so that a previous positioning can be associated with the current positioning. The coordinate jump phenomenon occurred during an independent positioning process in the prior art is reduced, and the continuity of a positioning trajectory and the positioning stability are improved.

The above descriptions are only the preferred embodiments of the invention, not thus limiting the embodiments and scope of the invention. Those skilled in the art should be able to realize that the schemes obtained from the content of specification and drawings of the invention are within the scope of the invention.

**Claims**

1. An indoor positioning method based on RSSI fingerprints, wherein a plurality of positioning gateways are pre-configured in a positioning area, and a plurality of fingerprint points are provided in the positioning area;
   wherein the positioning method comprises:

   Step S1, when each of the plurality of positioning gateways detects that a device to be located generates a positioning signal, obtaining a received signal strength of the positioning signal corresponding to each of the plurality of positioning gateways, respectively;
   Step S2, generating, according to the received signal strength and a pre-generated prior probability, a global posterior probability of each of the plurality of fingerprint points; and
   Step S3, generating and outputting, according to the global posterior probability and location coordinates of the fingerprint point, a positioning result, and generating, according to the positioning result and the global posterior probability, a new prior probability corresponding to each of the plurality of fingerprint points, respectively, then returning to Step S1.

2. The indoor positioning method of claim 1, further comprising a prior probability generation process prior to the positioning method, wherein the prior probability generation process is used to generate the pre-generated prior probability;

the prior probability comprises a single point prior probability and an overall prior probability;
the prior probability generation process comprises:

Step S01, generating the positioning signal on each of the plurality of fingerprint points, and obtaining the received signal strength corresponding to each of the plurality of fingerprint points on each of the plurality of positioning gateways, respectively; and
Step S02, generating, according to a plurality of received signal strengths, the single point prior probability and the overall prior probability, respectively.

3. The indoor positioning method of claim 2, wherein in Step S02, a method for generating the single point prior probability is expressed as:

$$P_i(RSSI = a|F_m) = \frac{SUM(RSSI = a|F_m)}{SUM(RSSI = any|F_m)},$$

wherein $P_i(RSSI = a|F_m)$ is the single point prior probability, $SUM(RSSI = a|F_m)$ is a total number of times that the $i^{th}$ positioning gateway generates the received signal strength being $a$ when the positioning signal is generated on the $m^{th}$ fingerprint point, and $SUM(RSSI = any|F_m)$ is the number of the received signal strength generated by the $i^{th}$ positioning gateway when the positioning signal is generated on the $m^{th}$ fingerprint point.

4. The indoor positioning method of claim 2, wherein in Step S02, a method for generating the overall prior probability is expressed as:

$$P_i(RSSI = a) = \frac{SUM(RSSI = a)}{SUM(RSSI = any)},$$

wherein $P_i(RSSI = a)$ is the overall prior probability, $SUM(RSSI = a)$ is a total number of times that the $i^{th}$ positioning gateway generates the received signal strength being a, and $SUM(RSSI = any)$ is the number of the received signal strength generated by the $i^{th}$ positioning gateway.

5. The indoor positioning method of claim 1, wherein Step S2 further comprises:

Step S21, generating a gateway posterior probability of each of the plurality of fingerprint points in each of the plurality of positioning gateways, respectively, according to the received signal strength and the prior probability corresponding to each of the plurality of fingerprint points; and
Step S22, generating the global posterior probability corresponding to each of the plurality of fingerprint points, respectively, according to the plurality of gateway posterior probabilities.

6. The indoor positioning method of claim 2, wherein the prior probability further comprises a positioning prior probability;

in Step S21, a method of generating the gateway posterior probability comprises:

$$P_i(F_m|RSSI = a) = \frac{P_i(RSSI = a|F_m) \times P^t(F_m)}{P_i(RSSI = a)},$$

wherein $P_i(F_m|RSSI = a)$ is the gateway posterior probability corresponding to the $m^{th}$ fingerprint point in the $i^{th}$ positioning gateway, $P_i(RSSI = a|F_m)$ is the single point prior probability, $P^t(F_m)$ is the positioning prior probability, $P_i(RSSI = a)$ is the overall prior probability;

when each of the plurality of positioning gateways receives the positioning signal generated by the device to be located for the first time, the positioning prior probability is $\dfrac{1}{n}$ , wherein n is the total number of the fingerprint points.

**7.** The indoor positioning method of claim 5, wherein in Step S22, a method for generating the global posterior probability comprises:

obtaining the received signal strengths of the plurality of positioning gateways, sorting the plurality of positioning gateways from high to low according to the received signal strengths, so as to successively select z positioning gateways with the highest received signal strengths as a group of positioning gateways;

for the global posterior probability corresponding to the fingerprint point

$$P(F_m) = \frac{\sum P_l(F_m | RSSI = a)}{z}$$

, wherein $P(F_m)$ is the global posterior probability corresponding to $m^{th}$ fingerprint point, $P_l(F_m | RSSI = a)$ is the global posterior probability corresponding to the $m^{th}$ fingerprint point in the $l^{th}$ positioning gateway in the group of positioning gateways, $l \in (1, 2, ..., z)$ , z is a total number of the positioning gateways in the group of the positioning gateways.

**8.** The indoor positioning method of claim 1, wherein Step S3 comprises:

Step S31, obtaining the global posterior probability of each of the plurality of fingerprint points, and sorting the plurality of fingerprint points from high to low according to the global posterior probability, so as to obtain a plurality of fingerprint points having the highest global posterior probabilities as a group of positioning fingerprint points,

Step S32, in the group of positioning fingerprint points, generating, according to the global posterior probability and a location coordinate of each of the plurality of fingerprint points, the positioning result and outputting the same; and

Step S33, generating, according to the positioning result and the global posterior probability, a new prior probability corresponding to each fingerprint point, respectively, then returning to Step S1.

**9.** The indoor positioning method of claim 8, wherein in Step S32, a method for generating the positioning result $(\hat{x}, \hat{y})$ comprises:

$$\hat{x} = \frac{\sum P(F_n) \times x_n}{q}$$

, wherein $\hat{x}$ is an abscissa of the positioning result, q is the number of the fingerprint points in the group of positioning fingerprint points, $x_n$ is an abscissa of the location coordinate of the $n^{th}$ fingerprint point in the group of positioning fingerprint points, $P(F_n)$ is the global posterior probability of the $n^{th}$ fingerprint point in the group of positioning fingerprint points, $n \in (1, 2, ..., q)$ ;

$$\hat{y} = \frac{\sum P(F_n) \times y_n}{q}$$

, wherein $\hat{y}$ is an abscissa of the positioning result, q is the number of the fingerprint points in the group of positioning fingerprint points, $y_n$ is an ordinate of the location coordinate of the $n^{th}$ fingerprint point in the group of positioning fingerprint points, $P(F_n)$ is the global posterior probability of the $n^{th}$ fingerprint point in the group of positioning fingerprint points, $n \in (1, 2, ..., q)$ .

**10.** The indoor positioning method of claim 8, wherein in Step S33, a method for generating the new prior probability comprises:

$$P^t(F_m) = \sum \frac{P(F_g) \times 75\%}{e} + \sum \frac{P(F_h) \times 25\%}{f}$$ ,

wherein $P^t(F_m)$ is the prior probability corresponding to the $m^{th}$ fingerprint point, $P(F_g)$ is the prior probability of the $g^{th}$ fingerprint point whose distance from the positioning result is within a first distance interval, $g \in (1,2, ..., e)$, e is a total number of the fingerprint points whose distance from the positioning result is within the first distance interval, $P(F_h)$ is the prior probability of the $h^{th}$ fingerprint point whose distance from the positioning result is within a second distance interval, $h \in (1,2, ..., f)$, f is a total number of the fingerprint points whose distance from the positioning result is within the second distance interval.

Figure 1

Step S1, when each of the plurality of positioning gateways detects that a device to be located generates a positioning signal, obtaining a received signal strength of the positioning signal corresponding to each of the plurality of positioning gateways, respectively;

S1

Step S2, generating, according to the received signal strength and a pre-generated prior probability, a global posterior probability of each of the plurality of fingerprint points;

S2

Step S3, generating and outputting, according to the global posterior probability and location coordinates of the fingerprint points, a positioning result, and generating, according to the positioning result and the global posterior probability, a new prior probability corresponding to each of the plurality of fingerprint points.

S3

Figure 2

Step S01, generating the positioning signal on each of the plurality of fingerprint points, and obtaining the received signal strength corresponding to each of the plurality of fingerprint points on each of the plurality of positioning gateways, respectively;

S01

Step S02, generating, according to a plurality of received signal strengths, the single point prior probability and the overall prior probability, respectively.

S02

Figure 3

S21

Step S21, generating a gateway posterior probability of each of the plurality of fingerprint points in each of the plurality of positioning gateways, respectively, according to the received signal strength and the prior probability corresponding to each of the plurality of fingerprint points;

S22

Step S22, generating the global posterior probability corresponding to each of the plurality of fingerprint points, respectively, according to the plurality of gateway posterior probabilities.

Figure 4

S31

Step S31, obtaining the global posterior probability of each of the plurality of fingerprint points, and sorting the plurality of fingerprint points from high to low according to the global posterior probability, so as to obtain a plurality of fingerprint points having the highest global posterior probabilities as a group of positioning fingerprint points;

S32

Step S32, in the group of positioning fingerprint points, generating, according to the global posterior probability and a location coordinate of each of the plurality of fingerprint points, the positioning result and outputting the same;

S33

Step S33, generating, according to the positioning result and the global posterior probability, a new prior probability corresponding to each fingerprint point, respectively.

S1

Step S1

Figure 5

Europäisches
Patentamt

European
Patent Office

Office européen
des brevets

# EUROPEAN SEARCH REPORT

**Application Number**

EP 22 18 1560

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 104 507 050 A (UNIV BEIHANG) 8 April 2015 (2015-04-08) * paragraph [0001] * * paragraph [Background_technology] * * paragraph [Technical_scheme] * * paragraph [Embodiment]; claim 1 * ----- | 1-10 | INV. G01S5/02 |
| A | CN 104 853 435 B (BEIJING JINGDONG SHANGKE INFORMATION TECHNOLOGY CO LTD ET AL.) 14 August 2018 (2018-08-14) * abstract * * claim 1 * ----- | 1-10 | |
| A | CN 103 634 901 B (UNIV SHANGHAI JIAOTONG) 17 August 2016 (2016-08-17) * abstract; claim 1 * ----- | 1-10 | |
| A | CN 105 764 137 A (UNIV BEIJING POSTS & TELECOMM) 13 July 2016 (2016-07-13) * abstract * * paragraph [Detailed_description] * ----- | 1-10 | TECHNICAL FIELDS SEARCHED (IPC) G01S |

The present search report has been drawn up for all claims

| Place of search | Date of completion of the search | Examiner |
|---|---|---|
| Munich | 2 December 2022 | Günther, Steffen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## ANNEX TO THE EUROPEAN SEARCH REPORT
### ON EUROPEAN PATENT APPLICATION NO.

EP 22 18 1560

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2022

| Patent document cited in search report | | Publication date | Patent family member(s) | Publication date |
|---|---|---|---|---|
| CN 104507050 | A | 08-04-2015 | NONE | |
| CN 104853435 | B | 14-08-2018 | NONE | |
| CN 103634901 | B | 17-08-2016 | NONE | |
| CN 105764137 | A | 13-07-2016 | NONE | |

EPO FORM P0459

For more details about this annex : see Official Journal of the European Patent Office, No. 12/82